# EUROPEAN PATENT APPLICATION

(11) **EP 4 836 309 A1**
(43) Date of publication of application: **04.11.2026**
(21) Application number: 23962640.1
(22) Date of filing: 27.12.2023
(51) Int. Cl.: H04B 7/0456

(54) **BEAM MEASUREMENT METHODS, NETWORK DEVICE, TERMINAL AND STORAGE MEDIUM**

(71) Applicant: Beijing Xiaomi Mobile Software Co., Ltd., Beijing 100085 (CN)
(72) Inventor: DUAN, Gaoming, Beijing 100085 (CN); ZHANG, Zhenyu, Beijing 100085 (CN)
(74) Representative: Gunzelmann, Rainer
(86) International application number: PCT/CN2023/142489
(87) International publication number: WO 2025/137957

(57) **Abstract**

The present disclosure relates to the technical field of communications, and specifically relates to beam measurement methods, a network device, a terminal, and a storage medium. A beam measurement method comprises: sending a reference signal to a terminal, the reference signal being used for beam measurement; receiving first information sent by the terminal, the first information being used for indicating index information corresponding to a resource having the strongest reference signal reception energy; and, on the basis of the index information, determining the direction or angle of the terminal. Thus, beam measurement time can be shortened.

## Description

### FIELD

The present disclosure relates to the field of communication technology, and particularly to a method for measuring a beam, a network device, a terminal, and a storage medium.

### BACKGROUND

To meet increasingly high communication capability requirements, higher frequency bands need to be used, such as terahertz (THz), sub-terahertz (sub-THz), and massive multiple-input multiple-output (MIMO) beamforming is adopted. The beam becomes extremely narrow, leading to a large candidate beam set and a long time required to complete a round of beam measurement.

### SUMMARY

Embodiments of the present disclosure provide a method for measuring a beam, a network device, a terminal, and a storage medium, to solve the technical problem in the related art that a long time is required to complete a round of beam measurement.

According to a first aspect of embodiments of the present disclosure, there is provided a method for measuring a beam, performed by a network device, including: sending a reference signal to a terminal, in which the reference signal is used for a beam measurement; receiving first information sent by the terminal, in which the first information indicates index information corresponding to a resource with a maximum receiving energy for the reference signal; and determining a direction or angle of the terminal based on the index information.

According to a second aspect of embodiments of the present disclosure, there is provided a method for measuring a beam, performed by a terminal, including: receiving a reference signal from a network device, in which the reference signal is used for a beam measurement; determining a resource with a maximum receiving energy for the reference signal; and sending first information to the network device, in which the first information indicates index information corresponding to the resource with the maximum receiving energy for the reference signal.

According to a third aspect of embodiments of the present disclosure, there is provided an apparatus for measuring a beam, including: a transceiver module, configured to send a reference signal to a terminal, in which the reference signal is used for a beam measurement; and receive first information sent by the terminal, in which the first information indicates index information corresponding to a resource with a maximum receiving energy for the reference signal; and a processing module, configured to determine a direction or angle of the terminal based on the index information.

According to a fourth aspect of embodiments of the present disclosure, there is provided an apparatus for measuring a beam, including: a transceiver module, configured to receive a reference signal from a network device, in which the reference signal is used for a beam measurement; and a processing module, configured to determine a resource with a maximum receiving energy for the reference signal, in which the transceiver module is further configured to send first information to the network device, and the first information indicates index information corresponding to the resource with the maximum receiving energy for the reference signal.

According to a fifth aspect of embodiments of the present disclosure, there is provided a network device, including: one or more processors; and a memory coupled to the one or more processors, in which the memory stores therein executable instructions that, when executed by the one or more processors, cause the terminal to perform the method for measuring a beam described in the first aspect.

According to a sixth aspect of embodiments of the present disclosure, there is provided a terminal, including: one or more processors; and a memory coupled to the one or more processor, in which the memory stores therein executable instructions that, when executed by the one or more processors, cause the network device to perform the method for measuring a beam described in the second aspect.

According to a seventh aspect of embodiments of the present disclosure, there is provided a communication system, including: a terminal, in which the terminal is configured to implement the method for measuring a beam described in the second aspect; and a network device, in which the network device is configured to implement the method for measuring a beam described in the first aspect.

According to an eighth aspect of embodiments of the present disclosure, there is provided a storage medium, having stored therein instructions that, when executed on a communication device, cause the communication device to perform the method for measuring a beam described in the first aspect or the method for measuring a beam described in the second aspect.

In embodiments of the present disclosure, the present application utilizes the beam squint phenomenon in a high-frequency system. In a phase of a beam measurement, the network device only needs to send the reference signal to the terminal once and receive the index information fed back by the terminal and used to indicate the resource with the maximum receiving energy for the reference signal. Based on this index information, the network device may determine whether the terminal has moved and determine the current direction or angle of the terminal to quickly complete the beam measurement. It may be seen that the technical solution implemented in the present application does not require performing the beam measurement on each beam in a candidate beam set in turn, greatly reducing the time for the beam measurement, and does not require adding a delay circuit network for precoding, reducing hardware costs.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram illustrating an architecture of a communication system in embodiments of the present disclosure.
FIG. 2 is an interactive schematic diagram illustrating a method for measuring a beam in embodiments of the present disclosure.
FIG. 3A is a schematic flowchart illustrating a method for measuring a beam in embodiments of the present disclosure.
FIG. 3B is a schematic diagram illustrating a beam squint in embodiments of the present disclosure.
FIG. 3C is a schematic diagram illustrating a resource unit in embodiments of the present disclosure.
FIG. 3D is a schematic diagram illustrating a resource unit group in embodiments of the present disclosure.
FIG. 3E is a schematic flowchart illustrating a method for measuring a beam in embodiments of the present disclosure.
FIG. 4 is a schematic flowchart illustrating a method for measuring a beam in embodiments of the present disclosure.
FIG. 5 is a schematic block diagram illustrating an apparatus structure of a terminal in embodiments of the present disclosure.
FIG. 6 is a schematic block diagram illustrating an apparatus structure of a network device in embodiments of the present disclosure.
FIG. 7 is a block diagram illustrating a communication device in embodiments of the present disclosure.
FIG. 8 is a block diagram illustrating a chip in embodiments of the present disclosure.

### DETAILED DESCRIPTION

Embodiments of the present disclosure provide a method for measuring a beam, a network device, a terminal, and a storage medium.

In a first aspect, embodiments of the present disclosure provide a method for measuring a beam, performed by a network device, including: sending a reference signal to a terminal, in which the reference signal is used for a beam measurement; receiving first information sent by the terminal, in which the first information indicates index information corresponding to a resource with a maximum receiving energy for the reference signal; and determining a direction or angle of the terminal based on the index information.

In the above embodiment, the beam squint phenomenon in a high-frequency system is utilized. In a phase of a beam measurement, the network device only needs to send the reference signal to the terminal once and receive the index information fed back by the terminal and used to indicate the resource with the maximum receiving energy for the reference signal. Based on this index information, the network device may determine whether the terminal has moved and determine the current direction or angle of the terminal to quickly complete the beam measurement. It may be seen that the technical solution implemented in the present application does not require performing the beam measurement on each beam in a candidate beam set in turn, greatly reducing the time for the beam measurement, and does not require adding a delay circuit network for precoding, reducing hardware costs.

In combination with some embodiments of the first aspect, in some embodiments, the index information includes at least one of: a subcarrier index (SI), in which the SI indicates a subcarrier corresponding to a resource unit with a maximum receiving energy among resource units for the reference signal received by the terminal; or a subcarrier group index (SGI), in which the SGI indicates a subcarrier group corresponding to a resource unit group with a maximum average receiving energy among resource unit groups for the reference signal received by the terminal.

In combination with some embodiments of the first aspect, in some embodiments, the SI indicates a subcarrier corresponding to a resource unit with a maximum receiving energy in a resource unit set, and the resource unit set is a subset of all resource units for the reference signal received by the terminal.

In combination with some embodiments of the first aspect, in some embodiments, the SGI indicates a subcarrier group corresponding to a resource unit group with a maximum average receiving energy among resource unit groups divided based on a resource unit set, and the resource unit set is a subset of all resource units for the reference signal received by the terminal.

In combination with some embodiments of the first aspect, in some embodiments, determining the direction or angle of the terminal based on the index information includes: determining a first subcarrier based on the index information; and determining the direction or angle of the terminal based on a first carrier frequency corresponding to the first subcarrier.

In combination with some embodiments of the first aspect, in some embodiments, determining the direction or angle of the terminal based on the first carrier frequency corresponding to the first subcarrier includes: determining the direction or angle of the terminal based on the first carrier frequency corresponding to the first subcarrier and a center carrier frequency corresponding to the reference signal.

In combination with some embodiments of the first aspect, in some embodiments, determining the direction or angle of the terminal based on the first carrier frequency corresponding to the first subcarrier and the center carrier frequency corresponding to the reference signal includes: determining the direction or angle of the terminal based on a ratio of the center carrier frequency to the first carrier frequency.

In combination with some embodiments of the first aspect, in some embodiments, determining the direction or angle of the terminal based on the first carrier frequency corresponding to the first subcarrier and the center carrier frequency corresponding to the reference signal includes:
determining the direction or angle of the terminal by the following formula: ${θ}_{m} = arcsin \left(\frac{{f}_{c}}{{f}_{m}}sin\left(θ\right)\right)$
where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

In combination with some embodiments of the first aspect, in some embodiments, after determining the direction or angle of the terminal based on the index information, the method further includes: determining compensation precoding information; and adjusting the direction or angle of the analog beamforming to the direction or angle of the terminal by using the compensation precoding information, and eliminating an array gain loss caused by a beam squint.

In combination with some embodiments of the first aspect, in some embodiments, before sending the reference signal to the terminal, the method further includes: sending second information to the terminal, in which the second information is used to instruct the terminal to send the first information.

In combination with some embodiments of the first aspect, in some embodiments, the method further includes: sending a configuration of the reference signal to the terminal.

In combination with some embodiments of the first aspect, in some embodiments, the method further includes: sending a configuration of the beam measurement to the terminal.

In combination with some embodiments of the first aspect, in some embodiments, the method further includes: sending a configuration of the index information to the terminal.

In combination with some embodiments of the first aspect, in some embodiments, the configuration of the index information includes an SI configuration and/or an SGI configuration.

In combination with some embodiments of the first aspect, in some embodiments, the SI configuration includes at least one of: a resource unit set, in which the resource unit set is a subset of all resource units for the reference signal received by the terminal; or a corresponding relationship between resource units and index numbers.

In combination with some embodiments of the first aspect, in some embodiments, the SGI configuration includes at least one of: a resource unit group; or a corresponding relationship between resource unit groups and index numbers.

In a second aspect, embodiments of the present disclosure provide a method for measuring a beam, performed by a terminal, including: receiving a reference signal from a network device, in which the reference signal is used for a beam measurement; determining a resource with a maximum receiving energy for the reference signal; and sending first information to the network device, in which the first information indicates index information corresponding to the resource with the maximum receiving energy for the reference signal.

In combination with some embodiments of the second aspect, in some embodiments, the index information includes at least one of: a subcarrier index (SI), in which the SI indicates a subcarrier corresponding to a resource unit with a maximum receiving energy among resource units for the reference signal received by the terminal; or a subcarrier group index (SGI), in which the SGI indicates a subcarrier group corresponding to a resource unit group with a maximum average receiving energy among resource unit groups for the reference signal received by the terminal.

In combination with some embodiments of the second aspect, in some embodiments, the SI indicates a subcarrier corresponding to a resource unit with a maximum receiving energy in a resource unit set, and the resource unit set is a subset of all resource units for the reference signal received by the terminal.

In combination with some embodiments of the second aspect, in some embodiments, the SGI indicates a subcarrier group corresponding to a resource unit group with a maximum average receiving energy among resource unit groups divided based on a resource unit set, and the resource unit set is a subset of all resource units for the reference signal received by the terminal.

In combination with some embodiments of the second aspect, in some embodiments, before sending the reference signal to the terminal, the method further includes: receiving second information from the network device, in which the second information is used to instruct the terminal to send the first information.

In combination with some embodiments of the second aspect, in some embodiments, the method further includes: receiving a configuration of the reference signal from the network device.

In combination with some embodiments of the second aspect, in some embodiments, the method further includes: receiving a configuration of the beam measurement from the network device.

In combination with some embodiments of the second aspect, in some embodiments, the method further includes: receiving a configuration of the index information from the network device.

In a third aspect, embodiments of the present disclosure provide an apparatus for measuring a beam, including: a transceiver module, configured to send a reference signal to a terminal, in which the reference signal is used for a beam measurement; and receive first information sent by the terminal, in which the first information indicates index information corresponding to a resource with a maximum receiving energy for the reference signal; and a processing module, configured to determine a direction or angle of the terminal based on the index information.

In a fourth aspect, embodiments of the present disclosure provide an apparatus for measuring a beam, including: a transceiver module, configured to receive a reference signal from a network device, in which the reference signal is used for a beam measurement; and a processing module, configured to determine a resource with a maximum receiving energy for the reference signal, in which the transceiver module is further configured to send first information to the network device, and the first information indicates index information corresponding to the resource with the maximum receiving energy for the reference signal.

In a fifth aspect, embodiments of the present disclosure provide a network device, including: one or more processors; and a memory coupled to the one or more processors, in which the memory stores therein executable instructions that, when executed by the one or more processors, cause the network device to perform the method for measuring a beam described in the first aspect.

In a sixth aspect, embodiments of the present disclosure provide a terminal, including: one or more processors; and a memory coupled to the one or more processor, in which the memory stores therein executable instructions that, when executed by the one or more processors, cause the terminal to perform the method for measuring a beam described in the second aspect.

In a seventh aspect, embodiments of the present disclosure provide a communication device, including: one or more processors; and a memory coupled to the one or more processors, in which the memory stores therein executable instructions that, when executed by the one or more processors, cause the processor to invoke instructions to enable the communication device to perform the method for measuring a beam described in the first aspect and the second aspect.

In an eighth aspect, embodiments of the present disclosure provide a communication system, including: a terminal, in which the terminal is configured to implement the method described in the second aspect; and a network device, in which the network device is configured to implement the method described in the first aspect.

In a ninth aspect, embodiments of the present disclosure provide a storage medium, having stored therein instructions that, when executed on a communication device, cause the communication device to perform the method described in the first aspect and the second aspect.

In a tenth aspect, embodiments of the present disclosure provide a program product, which when executed by a communication device, causes the communication device to perform the method described in the first aspect and the second aspect

In an eleventh aspect, embodiments of the present disclosure provide a computer program which, when run on a computer, causes the computer to perform the method described in the first aspect and the second aspect.

It may be understood that the aforementioned network device, terminal, communication device, communication system, storage medium, program product, and computer program are all used to execute the method in embodiments of the present disclosure. Therefore, the beneficial effects that may be achieved may refer to the beneficial effects in the corresponding method, which will not be repeated here.

Embodiments of the present disclosure provide a method for measuring a beam, a network device, a terminal, and a storage medium. In some embodiments, terms such as method for sending information, method for receiving information and method for processing information, communication method may be used interchangeably; terms such as network device, terminal, apparatus for processing information, and communication device may be used interchangeably; terms such as system for processing information and communication system may be used interchangeably.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like.

For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments of the present disclosure, descriptions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, descriptions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words.

For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "body" and the like in some cases.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

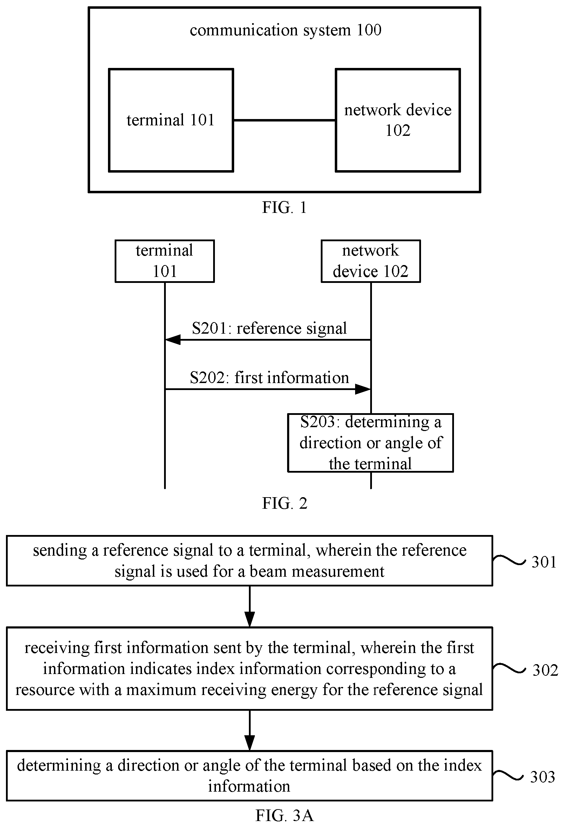

FIG. 1 is a schematic diagram illustrating an architecture of a communication system in embodiments of the present disclosure.

As shown in FIG. 1, a communication system 100 includes a terminal 101 and a network device 102, in which the network device includes at least one of: an access network device or a core network device.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the access network device is, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the core network device may be one device including one or more network elements, or may be a plurality of devices or a group of devices including all or part the aforementioned one or more network elements respectively. The network element may be virtual or physical. The core network includes, for example, at least one of an evolved packet core (EPC), a 5G core network (5GCN), or a next generation core (NGC).

In some embodiments, the technical solution of the present disclosure may be applied to an Open RAN architecture. Moreover, an interface between or within the access network device in embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited in embodiments of the present disclosure.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the body, which is not limited in embodiments of the present disclosure. Each body shown in FIG. 1 is an example, and the communication system may include all or some of the bodies shown in FIG. 1, or other bodies other than those shown in FIG. 1. The number and form of the bodies are arbitrary, each body may be physical or virtual, the connection relationship between the bodies is an example, the bodies may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

FIG. 2 is an interactive schematic diagram illustrating a method for measuring a beam in embodiments of the present disclosure.

As shown in FIG. 2, the method for measuring the beam may include the following steps.

In step S201, a network device 102 sends a reference signal to a terminal 101.

In some embodiments, the network device 102 sends the reference signal to the terminal, in which the reference signal is used for a beam measurement.

In some embodiments, the terminal 101 receives the reference signal from the network device 102, in which the reference signal is used for the beam measurement.

In some embodiments, before sending the reference signal to the terminal 101, the network device 102 may send second information to the terminal 101, in which the second information is used to instruct the terminal to send the first information.

In some embodiments, before sending the reference signal to the terminal 101, the network device 102 may send a configuration of the reference signal to the terminal 101.

In some embodiments, before sending the reference signal to the terminal 101, the network device 102 may send a configuration of the beam measurement to the terminal 101.

In step S202, the terminal 101 sends the first information to the network device 102.

In some embodiments, after receiving the reference signal from the network device 102, the terminal 101 may determine a resource with a maximum receiving energy for the reference signal; and the terminal 101 may send the first information to the network device 102, in which the first information indicates index information corresponding to the resource with the maximum receiving energy for the reference signal.

In some embodiments, after sending the reference signal to the terminal 101, the network device 102 may receive the first information sent by the terminal, in which the first information indicates the index information corresponding to the resource with the maximum receiving energy for the reference signal.

In some embodiments, the index information may include: a subcarrier index (SI), in which the SI indicates a subcarrier corresponding to a resource unit with a maximum receiving energy among resource units for the reference signal received by the terminal.

In some embodiments, the SI indicates a subcarrier corresponding to a resource unit with a maximum receiving energy in a resource unit set, and the resource unit set is a subset of all resource units for the reference signal received by the terminal.

In some embodiments, the index information may include: a subcarrier group index (SGI), in which the SGI indicates a subcarrier group corresponding to a resource unit group with a maximum average receiving energy among resource unit groups for the reference signal received by the terminal.

In some embodiments, the SGI indicates a subcarrier group corresponding to a resource unit group with a maximum average receiving energy among resource unit groups divided based on a resource unit set, and the resource unit set is a subset of all resource units for the reference signal received by the terminal.

In some embodiments, the index information may include the SI and the SGI.

In some embodiments, the network device 102 may send a configuration of the index information to the terminal.

In some embodiments, the configuration of the index information may include an SI configuration and/or an SGI configuration.

In some embodiments, the SI configuration includes at least one of: a resource unit set, in which the resource unit set is a subset of all resource units for the reference signal received by the terminal; or a corresponding relationship between resource units and index numbers.

In some embodiments, the SGI configuration includes at least one of: a resource unit group; or a corresponding relationship between resource unit groups and index numbers.

In some embodiments, the terminal 101 may determine the resource with the maximum receiving energy for the reference signal based on the configuration of the beam measurement.

In some embodiments, the terminal 101 may determine the index information corresponding to the resource with the maximum receiving energy for the reference signal based on the configuration of the index information, and send the first information to the network device 102.

In step S203, the network device 102 determines a direction or angle of the terminal based on the index information.

In some embodiments, the network device 102 may determine the direction or angle of the terminal based on the index information indicated by the first information.

In some embodiments, the network device 102 may determine a first subcarrier based on the index information; and determine the direction or angle of the terminal based on a first carrier frequency corresponding to the first subcarrier.

In some embodiments, the network device 102 may determine the first subcarrier based on the index information; and determine the direction or angle of the terminal based on the first carrier frequency corresponding to the first subcarrier and a center carrier frequency corresponding to the reference signal.

In some embodiments, the network device 102 may determine the first subcarrier based on the index information; and determine the direction or angle of the terminal based on a ratio of the center carrier frequency to the first carrier frequency.

In some embodiments, the network device 102 may determine the first subcarrier based on the index information; and determine the direction or angle of the terminal by the following formula: ${θ}_{m} = arcsin \left(\frac{{f}_{c}}{{f}_{m}}sin\left(θ\right)\right)$
where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

In some embodiments, after determining the direction or angle of the terminal based on the index information, the network device 102 may determine compensation precoding information, adjust the direction or angle of the analog beamforming to the direction or angle of the terminal by using the compensation precoding information, and eliminate an array gain loss caused by a beam squint.

The communication method involved in the embodiments of the present disclosure may include at least one of steps S201 to S203. For example, step S201 may be implemented as an independent embodiment, step S202 may be implemented as an independent embodiment, step S203 may be implemented as an independent embodiment, any two of steps S201, S202, and S203 may be implemented as an independent embodiment, and steps S201+S202+S203 may be implemented as an independent embodiment, which are not limited in the embodiments of the present disclosure.

In some embodiments, steps S201, S202, and S203 may be executed in a different order or simultaneously.

In some embodiments, step S201 is optional, and in different embodiments, one or more of these steps may be omitted or substituted.

In some embodiments, step S202 is optional, and in different embodiments, one or more of these steps may be omitted or substituted.

In some embodiments, step S203 is optional, and in different embodiments, one or more of these steps may be omitted or substituted.

In some embodiments, reference may be made to other embodiments described before or after the specification corresponding to FIG. 2.

In some embodiments, with the continuous development of wireless communication, the requirements for communication capabilities are also increasing. For future application scenarios such as Augmented Reality (AR)/Virtual Reality (VR), Internet of Vehicles, Internet of Things, holographic communication, and ultra-high-definition video transmission, ultra-high speed, ultra-low latency, and ultra-large bandwidth communication have become the norm. The existing Frequency Range 1 (FR1) and Frequency Range 2 (FR2) have limited bandwidth and cannot support the aforementioned services. Therefore, higher frequency bands need to be used, such as sub-THz and THz. According to the electromagnetic wave spatial path loss model, higher frequencies have higher free-space path loss, and the same transmit power results in a shorter radiation distance. Therefore, large-scale MIMO beamforming is needed to solve the problem of short transmission distance.

The width of a beam is related to the scale of the antenna array and the frequency, i.e., the higher the frequency, the narrower the beam, and the larger the antenna array scale, the narrower the beam. This results in extremely narrow beams for high-frequency large-scale MIMO systems. Therefore, to cover the same cell, a high-frequency large-scale MIMO system requires more beams than a New Radio (NR) system. Moreover, because high-frequency electromagnetic waves have poor reflection and diffraction capabilities, it is generally considered that only a Line of Sight (LoS) path exists.

Taking terahertz as an example, due to a high frequency band of terahertz, if MIMO beamforming is used, the beam will become extremely narrow, and a coverage range and angle of a single beam are very small. As users move, frequent beam switching is bound to occur, and thus frequent beam measurement is required during a beam tracking phase. The method for measuring a beam in related art involves sequentially measuring the beam in a candidate beam set, which takes a long time to complete one round of measurement. Moreover, since the terminal is continuously moving, it may happen that the candidate beam set has not completed measurement, but the current working beam has already failed. This will cause the terminal to consider beam failure and need to re-initiate random access.

In some implementations, in a case of performing the beam measurement, cyclic delay diversity (CDD) precoding may also be employed. By using a delayer to apply delay precoding to different antenna ports, the effect of superimposing different phases on different subcarriers in a frequency domain is achieved. Therefore, the beams formed by different sub-carriers in the frequency domain have different directions and present a wide beam state, such that the speed of beam measurement may be greatly reduced. However, in this method, since the CDD precoding needs to be added, a delay circuit network needs to be added in the hardware, and the hardware cost is increased. Moreover, the precoding scheme is a closed loop precoding, and the terminal needs to feed back the precoding information, which increases the consumption of a communication resource.

In a first aspect, embodiments of the present disclosure provide a method for measuring a beam. FIG. 3A is a schematic flowchart illustrating a method for measuring a beam in embodiments of the present disclosure. The method for measuring the beam shown in this embodiment may be performed by a network device.

As shown in FIG. 3A, the method for measuring the beam may include the following steps.

In step S301, a reference signal is sent to a terminal, in which the reference signal is used for a beam measurement.

In some embodiments, in a case of performing the beam measurement with the terminal, the network device may send the reference signal to the terminal, in which the reference signal is used for the beam measurement. A direction or angle of analog beamforming used by the network device when sending the reference signal to the terminal still follows a direction or angle of the terminal determined before the beam measurement, which may be referred to as an initial direction or angle in the following embodiments.

The reference signal may include at least one of: a channel state information reference signal (CSI-RS) or a synchronization signal block (SSB).

In step S302, first information sent by the terminal is received, in which the first information indicates index information corresponding to a resource with a maximum receiving energy for the reference signal.

The resource with the maximum receiving energy may be a resource unit with the maximum receiving energy or a resource unit group with the maximum receiving energy.

It should be noted that in a high-frequency system, a bandwidth is generally large. Due to large wavelength difference between different subcarriers, under a same analog beamforming vector, beam squint phenomenon occurs. The beam will deviate from a boresight (a target direction) and spread to other directions, similar to the dispersion of light, and an angle at which the beam deviates from the boresight changes with a signal frequency. This phenomenon causes a loss of transmit antenna array gain, turning an original narrow beam into a wide beam.

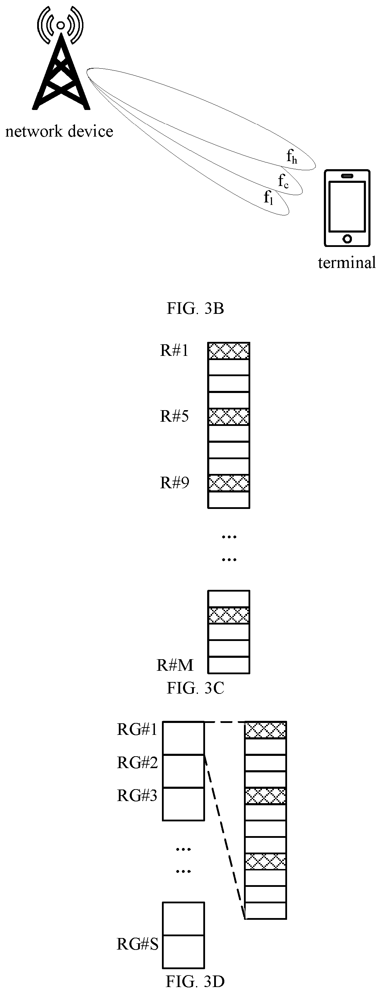

As shown in FIG. 3B, in a case where the network device sends the reference signal to the terminal, due to the beam squint phenomenon, a beam direction of the reference signal will shift at different carrier frequencies fₗ, f_{c}, and fₕ.

In some embodiments, in a case of performing the beam measurement, the terminal may receive the reference signal from the network device, in which the reference signal is used for the beam measurement, and calculate receiving energy for the reference signal in each resource unit to determine the resource unit with the maximum receiving energy and the index information corresponding to the resource with the maximum receiving energy.

For example, as shown in FIG. 3B, if the terminal has not moved, the resource unit with the maximum receiving energy is a resource unit where the center carrier frequency f_{c} of the reference signal is located; if the terminal moves downward, the resource unit with the maximum receiving energy may be a resource unit where the fₗ is located; if the terminal moves upward, the resource unit with the maximum receiving energy may be a resource unit where the fₕ is located.

In some embodiments, the network device may receive the first information from the terminal, in which the first information indicates the index information corresponding to the resource with the maximum receiving energy for the reference signal. The first information may be referred to as auxiliary information for the beam measurement.

In step S303, the direction or angle of the terminal is determined based on the index information.

In some embodiments, after receiving the first information from the terminal, the network device may calculate the current direction or angle of the terminal based on the index information indicated by the first information. Furthermore, the network device may adjust the direction or angle of the analog beamforming based on the current direction or angle of the terminal to achieve the beam measurement and beam switching during the movement of the terminal.

In some embodiments, after receiving the first information from the terminal, the network device may determine whether the terminal has moved based on the index information indicated by the first information. If the terminal has moved, an offset of the terminal may be calculated based on the resource with the maximum receiving energy for the reference signal indicated by the index information, or the current direction or angle of the terminal may be calculated. Furthermore, the network device may adjust the direction or angle of the analog beamforming based on the current direction or angle of the terminal to achieve the beam measurement and beam switching during the movement of the terminal.

It should be noted that the technical solution of embodiments of the present application is applicable to high-frequency a large-scale MIMO communication system, such as an MIMO communication system using THz or sub-THz.

It should be noted that the embodiment shown in FIG. 3A may be implemented independently or in combination with at least one other embodiment in the present disclosure, which may be selected as needed, and is not limited in the present disclosure.

Based on the technical solutions of the above embodiments, the present application utilizes the beam squint phenomenon in a high-frequency system. In a phase of a beam measurement, the network device only needs to send the reference signal to the terminal once and receive the index information fed back by the terminal and used to indicate the resource with the maximum receiving energy for the reference signal. Based on this index information, the network device may determine the current direction or angle of the terminal to quickly complete the beam measurement. It may be seen that the technical solution implemented in the present application does not require performing the beam measurement on each beam in a candidate beam set in turn, greatly reducing the time for the beam measurement, and does not require adding a delay circuit network for precoding, reducing hardware costs.

In some embodiments, before step S301, the network device may further send second information to the terminal, in which the second information indicates whether to report the first information to the network device during a CSI reporting. The second information may be included in a reporting configuration of the reference signal sent by the network device to the terminal, for example, a CSI-RS reporting configuration.

In some embodiments, the network device may send the second information to the terminal, in which the second information is used to instruct the terminal to report the first information to the network device during the CSI reporting. After sending the reference signal for the beam measurement to the terminal, the network device may receive the first information from the terminal and determine the current direction or angle of the terminal based on the index information corresponding to the resource with the maximum receiving energy for the reference signal indicated by the first information.

In some embodiments, the index information indicated by the first information may include at least one of: an SI, in which the SI indicates a subcarrier corresponding to the resource unit with the maximum receiving energy among resource units for the reference signal received by the terminal; or an SGI, in which the SGI indicates a subcarrier group corresponding to the resource unit group with the maximum average receiving energy among the resource unit groups for the reference signal received by the terminal.

In some embodiments, the index information indicated by the first information includes the SI, in which the SI may indicate a subcarrier corresponding to a resource unit with the maximum receiving energy among all resource units across an entire bandwidth for the reference signal resource, or the SI may indicate a subcarrier corresponding to a resource unit with the maximum receiving energy among some resource units for the reference signal resource. The some resource units for the reference signal resource may be represented by a resource unit set, in which the resource unit set is a subset of all resource units across the entire bandwidth of the reference signal resource.

In some embodiments, the network device may send an SI configuration to the terminal, in which the SI configuration indicates a corresponding relationship between resource units and index numbers. Based on the SI configuration, in a case of receiving the reference signal sent by the network device, the terminal may calculate receiving energy in each resource unit, determine the resource unit with the maximum receiving energy therefrom, and report the SI to the network device via the first information, in which the SI may include an index number corresponding to the resource unit with the maximum receiving energy.

For example, a resource for the reference signal includes M resource units {R#1, R#2, ..., R#M} across the entire bandwidth. The SI configuration may configure one index number {SI=m, m=1,2,...,M} to each resource unit. In a case of receiving the reference signal sent by the network device, the terminal may measure receiving energy of all resource units based on the SI configuration, and determine the resource unit with the maximum receiving energy therefrom. If the resource unit with the maximum receiving energy is R#6, an index number 6 corresponding to RE#6 may be used as the SI, and is reported to the network device via the first information. The network device may determine, based on the index number 6, that the resource unit with the maximum receiving energy is R#6, and determine the current direction or angle of the terminal based on the subcarrier corresponding to the resource unit R#6.

In some embodiments, considering that the beam squint effect of adjacent subcarriers is not obvious, the SI configuration may indicate one resource unit set and the corresponding relationship between the resource units and the index numbers.

The method for determining the resource unit set may be set according to actual needs, for example, selecting resource units at intervals from all resource units across the entire bandwidth of the resource for the reference signal based on a preset interval to form the resource unit set.

For example, as shown in FIG. 3C, the resource for the reference signal includes M resource units {R#1, R#2, ..., R#M-1, R#M} across the entire bandwidth. The SI configuration may indicate one resource unit set {R#1, R#5, R#9, ...} composed of some of the M resource units. It may be seen that one resource unit is taken every three resource units to form the resource unit set. The SI configuration may also configure one index number {SI=m, m=1, 2, ..., M/4} to each resource unit in the resource unit set. In a case of receiving the reference signal sent by the network device, the terminal may measure receiving energy of each resource unit in the resource unit set based on the SI configuration and determine the resource unit with the maximum receiving energy from the resource unit set. If the resource unit with the maximum receiving energy is R#5, an index number 2 corresponding to R#5 may be used as the SI, and is reported to the network device via the first information. The network device may determine, based on the index number 2, that the resource unit with the maximum receiving energy is R#5, and determine the current direction or angle of the terminal based on the subcarrier corresponding to the resource unit R#5.

In some embodiments, the SI may include one index number to indicate a subcarrier corresponding to one resource unit with the maximum receiving energy, or may include multiple index numbers to indicate subcarriers corresponding to multiple resource units with the maximum receiving energy. The number of index numbers carried by the SI may also be indicated by the network device via the SI configuration, or predefined by a protocol, etc.

In some embodiments, the index information indicated by the first information includes the SGI, in which the SGI indicates the subcarrier group corresponding to the resource unit group with the maximum average receiving energy among resource unit groups for the reference signal received by the terminal. Each resource unit group may include multiple resource units for the reference signal.

In some embodiments, the network device may send an SGI configuration to the terminal, in which the SGI configuration may include all resource unit groups for indicating the reference signal and the corresponding relationship between the resource units and the index numbers. In a case of receiving the reference signal sent by the network device, the terminal may calculate an average receiving energy of each resource unit group, determine the resource unit group with the maximum average receiving energy therefrom, and report the SGI to the network device via the first information. The SGI may include an index number corresponding to the resource unit group with the maximum average receiving energy.

For example, the SGI configuration may indicate S resource unit groups {RG#1, RG#2, ..., RG#S-1, RG#S} for the reference signal, in which each resource unit group may include 4 consecutive resource units, where RG#1 includes R#1 to R#4, RG#2 includes R#5 to R#8, ... and so on. The SGI configuration may also configure one index number {SGI=n, n=1, 2, ..., S} to each resource unit group. In a case of receiving the reference signal sent by the network device, the terminal may calculate the average receiving energy of each resource unit group based on the SGI configuration, and determine the resource unit group with the maximum average receiving energy. If the resource unit group with the maximum average receiving energy is S#2, an index number 2 corresponding to S#2 may be used as the the SGI, and is reported to the network device via the first information. The network device may determine that the resource unit group with the maximum receiving energy is S#2 based on the index number 2 and determine the direction or angle of the terminal based on a subcarrier corresponding to a certain RE in the resource units R#5 to R#8 in the resource unit group S#2.

In some embodiments, each resource unit group in the SGI configuration may include multiple consecutive resource units, or may include multiple non-consecutive resource units, for example, multiple equally spaced resource units.

In some embodiments, the SGI may indicate the subcarrier group corresponding to the resource unit group with the maximum average receiving energy among resource unit groups divided based on the resource unit set, in which the resource unit set is a subset of all resource units for the reference signal received by the terminal.

The SGI configuration may indicate the resource unit set, the resource unit group divided based on the resource unit set, and the corresponding relationship between the resource units and the index numbers.

For example, as shown in FIG. 3D, the SGI configuration may indicate S resource unit groups {RG#1, RG#2, ..., RG#S-1, RG#S} for the reference signal, in which each resource unit group may include 3 equally spaced resource units, where RG#1 includes {R#1, R#5, R#9}, RG#2 includes {R#13, R#17, R#21}, ... and so on. The SGI configuration may also configure one index number {SGI=n, n=1, 2, ..., S} for each resource unit group. In a case of receiving the reference signal sent by the network device, the terminal may calculate the average receiving energy of each resource unit group based on the SGI configuration, and determine the resource unit group with the maximum average receiving energy. If the resource unit group with the maximum average receiving energy is S#2, the index number 2 corresponding to S#2 may be used as the the SGI, and is reported to the network device via the first information. The network device may determine that the resource unit group with the maximum receiving energy is S#2 based on the index number 2 and determine the direction or angle of the terminal based on the subcarrier corresponding to a certain RE in the resource units {R#13, R#17, R#21} in the resource unit group S#2.

In some embodiments, the SGI may include one index number to indicate a subcarrier group corresponding to one resource unit group with the maximum average receiving energy, or may include multiple index numbers to indicate subcarrier groups corresponding to multiple resource unit groups with the maximum receiving energy. The number of index numbers carried by the SGI may also be indicated by the network device via the SI configuration, or predefined by a protocol, etc.

In some embodiments, after receiving the first information from the terminal, the network device may determine a first subcarrier based on the index information indicated by the first information, that is, use the first subcarrier as the subcarrier corresponding to the resource unit with the maximum receiving energy for the reference signal received by the terminal; and determine the direction or angle of the terminal based on a first carrier frequency corresponding to the first subcarrier and a center carrier frequency corresponding to the reference signal.

In some embodiments, in a case where the index information indicated by the first information includes the SI, after receiving the first information from the terminal, the network device may determine a resource unit corresponding to the index number based on the index number indicated by the SI, and use the subcarrier corresponding to the resource unit as the first subcarrier.

In some embodiments, in a case where the index information indicated by the first information includes the SGI, after receiving the first information from the terminal, the network device may determine a resource unit group corresponding to the index number based on the index number indicated by the SGI, and select a first subcarrier from the subcarrier group corresponding to the resource unit group.

There are various methods for selecting the first subcarrier from the subcarrier group. For example, the first subcarrier may be selected randomly, or the subcarrier located in the middle of the subcarrier group may be selected as the first subcarrier.

In some embodiments, after determining the first subcarrier based on the index information, the network device may determine the direction or angle of the terminal based on the first carrier frequency corresponding to the first subcarrier in various ways. For example, the network device may calculate the direction or angle of the terminal based on a ratio or difference between the center carrier frequency corresponding to the reference signal and the first carrier frequency.

In some embodiments, after determining the first subcarrier based on the index information, the network device may first determine whether it is necessary to re-determine the direction or angle of the terminal based on the first carrier frequency corresponding to the first subcarrier and the center carrier frequency corresponding to the reference signal. For example, if the difference between the center carrier frequency and the first carrier frequency reaches a preset frequency threshold, it is determined that the direction or angle of the terminal needs to be re-determined, and the direction or angle of the terminal is calculated based on the ratio of the center carrier frequency to the first carrier frequency.

In one implementation, the network device may calculate the direction or angle of the terminal by the following formula: ${θ}_{m} = arcsin \left(\frac{{f}_{c}}{{f}_{m}}sin\left(θ\right)\right)$
where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

In some embodiments, after receiving the first information from the terminal and determining the direction or angle of the terminal based on the index information indicated by the first information, the network device may adjust the direction or angle of the analog beamforming to the calculated direction or angle of the terminal and send beam adjustment result information or data to the terminal based on the adjusted direction or angle of the analog beamforming.

In some embodiments, after receiving the first information from the terminal and determining the direction or angle of the terminal based on the index information indicated by the first information, the network device may first determine whether it is necessary to adjust the direction or angle of the analog beamforming. For example, if the difference between the direction or angle of the terminal and the current direction or angle of the analog beamforming reaches a preset angle threshold, the network device adjusts the direction or angle of the analog beamforming to the calculated direction or angle of the terminal, and sends the beam adjustment result information or data to the terminal based on the adjusted direction or angle of the analog beamforming.

In some embodiments, the method for the network device to adjust the direction or angle of the analog beamforming may include: determining compensation precoding information; and adjusting the direction or angle of the analog beamforming to the direction or angle of the terminal by using the compensation precoding information, and eliminating an array gain loss caused by a beam squint.

In some embodiments, before sending the reference signal to the terminal, the network device may also send relevant configurations for the beam measurement to the terminal, including at least one of: a configuration of the reference signal, a configuration of the beam measurement or a configuration of the index information.

The configuration of the reference signal may indicates the resource for the reference signal, for example, it may indicate a CSI-RS resource. The configuration of the beam measurement may be used to instruct the terminal to measure the receiving energy for the reference signal in various resource units, and a method for determining the resource unit with the maximum receiving energy. The configuration of the index information may include the SI configuration and/or the SGI configuration.

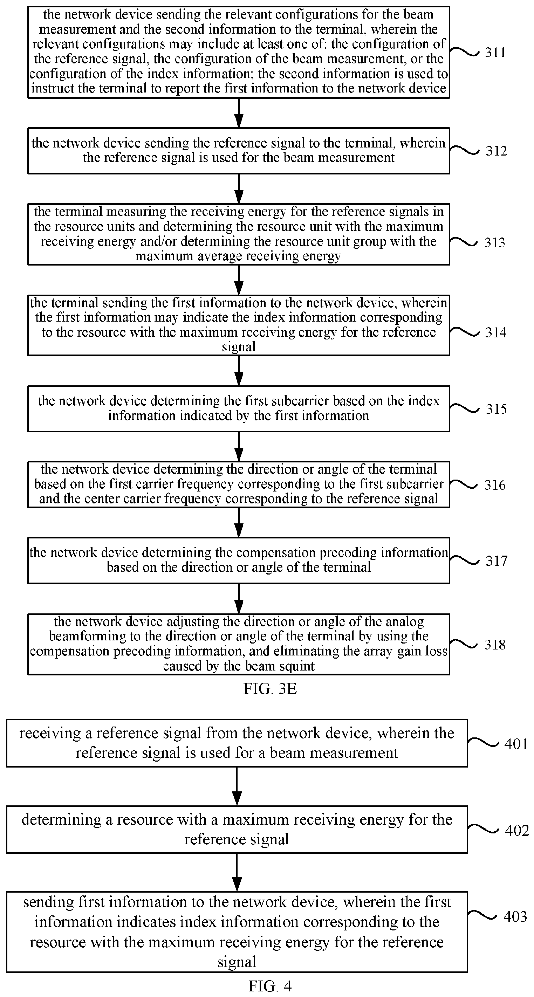

In some embodiments, as shown in FIG. 3E, the method for measuring the beam provided in embodiments of the present application includes the following steps.

In step S311, the network device sends the relevant configurations for the beam measurement and the second information to the terminal, in which the relevant configurations may include at least one of: the configuration of the reference signal, the configuration of the beam measurement, or the configuration of the index information; the second information is used to instruct the terminal to report the first information to the network device.

In step S312, the network device sends the reference signal to the terminal, in which the reference signal is used for the beam measurement.

In step S313, the terminal measures the receiving energy for the reference signals in the resource units and determines the resource unit with the maximum receiving energy and/or determines the resource unit group with the maximum average receiving energy.

In step S314, the terminal sends the first information to the network device, in which the first information may indicate the index information corresponding to the resource with the maximum receiving energy for the reference signal. The index information may include the SI and/or the SGI, in which the SI indicates the subcarrier corresponding to the resource unit with the maximum receiving energy among resource units for the reference signal received by the terminal, and the SGI indicates the subcarrier group corresponding to the resource unit group with the maximum average receiving energy among resource unit groups for the reference signal received by the terminal.

In step S315, the network device determines the first subcarrier based on the index information indicated by the first information.

In step S316, the network device determines the direction or angle of the terminal based on the first carrier frequency corresponding to the first subcarrier and the center carrier frequency corresponding to the reference signal.

In step S317, the network device determines the compensation precoding information based on the direction or angle of the terminal.

In step S318, the network device adjusts the direction or angle of the analog beamforming to the direction or angle of the terminal by using the compensation precoding information, and eliminates the array gain loss caused by the beam squint.

In a second aspect, embodiments of the present disclosure provide a method for measuring a beam. FIG. 4 is a schematic flowchart illustrating a method for measuring a beam in embodiments of the present disclosure. The method for measuring the beam shown in this embodiment may be performed by a network device.

As shown in FIG. 4, the method for measuring the beam may include the following steps.

In step S401, a reference signal is received from the network device, in which the reference signal is used for a beam measurement.

In some embodiments, in a case of performing the beam measurement with the network device, a terminal may receive the reference signal from the network device, in which the reference signal is used for the beam measurement. A direction or angle of analog beamforming used by the network device when sending the reference signal to the terminal still follows a direction or angle of the terminal determined before the beam measurement, which may be referred to as an initial direction or angle in the following embodiments.

The reference signal may include at least one of: a CSI-RS or an SSB.

In step S402, a resource with a maximum receiving energy for the reference signal is determined.

In some embodiments, in a case of performing the beam measurement, the terminal may receive the reference signal from the network device, in which the reference signal is used for the beam measurement, and calculate the receiving energy for the received reference signal in each resource unit to determine the resource with the maximum receiving energy therefrom.

The resource with the maximum receiving energy may be a resource unit with the maximum receiving energy or a resource unit group with the maximum receiving energy.

In step S403, first information is sent to the network device, in which the first information indicates index information corresponding to the resource with the maximum receiving energy for the reference signal.

In some embodiments, after determining the resource with the maximum receiving energy, the terminal may determine the index information corresponding to the resource with the maximum receiving energy, and send the first information to the network device based on the index information. The first information indicates the index information corresponding to the resource with the maximum receiving energy for the reference signal, such that after receiving the first information from the terminal, the network device may calculate a current direction of the terminal based on the index information indicated by the first information. Furthermore, the network device may adjust the direction or angle of analog beamforming based on the current direction or angle of the terminal to achieve the beam measurement and beam switching during the movement of the terminal.

It should be noted that the technical solution of embodiments of the present application is applicable to a high-frequency massive MIMO communication system, such as an MIMO communication system using THz or sub-THz.

It should be noted that the embodiments shown in FIG. 4 may be implemented independently or in combination with at least one other embodiment of the present disclosure, which may be selected as needed, and is not limited in the present disclosure.

In embodiments of the present disclosure, the present application utilizes the beam squint phenomenon in a high-frequency system. In a phase of the beam measurement, after receiving the reference signal sent by the network device, the terminal may determine the resource with the maximum receiving energy for the reference signal and feed back to the network device the index information used to indicate the resource with the maximum receiving energy for the reference signal, such that the network device may determine the current direction or angle of the terminal based on the index information to quickly complete the beam measurement. It may be seen that the technical solution implemented in the present application does not require performing the beam measurement on each beam in a candidate beam set in turn, greatly reducing the time for the beam measurement, and does not require adding a delay circuit network for precoding, reducing hardware costs.

In some embodiments, before receiving the reference signal from the network device, the terminal may first receive second information from the network device, in which the second information is used to instruct the terminal to report the first information to the network device during a CSI reporting. After receiving the second information, the terminal may receive the reference signal sent by the network device, determine the resource with the maximum receiving energy for the reference signal, and send the first information to the network device, in which the first information indicates the index information corresponding to the resource with the maximum receiving energy for the reference signal.

In some embodiments, the index information includes at least one of: an SI, in which the SI indicates a subcarrier corresponding to a resource unit with a maximum receiving energy among resource units for the reference signal received by the terminal; or an SGI, in which the SGI indicates a subcarrier group corresponding to a resource unit group with a maximum average receiving energy among resource unit groups for the reference signal received by the terminal.

In some embodiments, the index information indicated by the first information includes the SI, in which the SI may indicate a subcarrier corresponding to a resource unit with the maximum receiving energy among all resource units across an entire bandwidth for the reference signal resource, or the SI may indicate a subcarrier corresponding to a resource unit with the maximum receiving energy among some resource units for the reference signal resource. The some resource units for the reference signal resource may be represented by a resource unit set, in which the resource unit set is a subset of all resource units across the entire bandwidth of the reference signal resource.

In some embodiments, the terminal may receive an SI configuration from the network device, in which the SI configuration indicates a corresponding relationship between resource units and index numbers. Based on the SI configuration, in a case of receiving the reference signal sent by the network device, the terminal may calculate receiving energy in each resource unit, determine the resource unit with the maximum receiving energy therefrom, and report the SI to the network device via the first information, in which the SI may include an index number corresponding to the resource unit with the maximum receiving energy.

In some embodiments, the SI configuration may indicate the resource unit set, and the corresponding relationship between the resource units and the index numbers.

The method for determining the resource unit set may be set according to actual needs, for example, selecting resource units at intervals from all resource units across the entire bandwidth of the resource for the reference signal based on a preset interval to form the resource unit set.

In some embodiments, the index information indicated by the first information includes the SGI, in which the SGI indicates the subcarrier group corresponding to the resource unit group with the maximum average receiving energy among resource unit groups for the reference signal received by the terminal. Each resource unit group may include multiple resource units for the reference signal.

In some embodiments, the terminal may send an SGI configuration to the network device, in which the SGI configuration may include all resource unit groups for indicating the reference signal and the corresponding relationship between the resource units and the index numbers. In a case of receiving the reference signal sent by the network device, the terminal may calculate an average receiving energy of each resource unit group, determine the resource unit group with the maximum average receiving energy therefrom, and report the SGI to the network device via the first information. The SGI may include an index number corresponding to the resource unit group with the maximum average receiving energy.

In some embodiments, each resource unit group in the SGI configuration may include multiple consecutive resource units, or may include multiple non-consecutive resource units, for example, multiple equally spaced resource units.

In some embodiments, the SGI may indicate the subcarrier group corresponding to the resource unit group with the maximum average receiving energy among resource unit groups divided based on the resource unit set, in which the resource unit set is a subset of all resource units for the reference signal received by the terminal.

The SGI configuration may indicate the resource unit set, the resource unit group divided based on the resource unit set, and the corresponding relationship between the resource units and the index numbers.

In some embodiments, after receiving the first information from the terminal, the network device may determine a first subcarrier based on the index information indicated by the first information, that is, use the first subcarrier as the subcarrier corresponding to the resource unit with the maximum receiving energy for the reference signal received by the terminal; and determine the direction or angle of the terminal based on a first carrier frequency corresponding to the first subcarrier and a center carrier frequency corresponding to the reference signal.

In some embodiments, in a case where the index information indicated by the first information includes the SI, after receiving the first information from the terminal, the network device may determine a resource unit corresponding to the index number based on the index number indicated by the SI, and use the subcarrier corresponding to the resource unit as the first subcarrier.

In some embodiments, in a case where the index information indicated by the first information includes the SGI, after receiving the first information from the terminal, the network device may determine a resource unit group corresponding to the index number based on the index number indicated by the SGI, and select a first subcarrier from the subcarrier group corresponding to the resource unit group.

There are various methods for selecting the first subcarrier from the subcarrier group. For example, the first subcarrier may be selected randomly, or the subcarrier located in the middle of the subcarrier group may be selected as the first subcarrier.

In some embodiments, after determining the first subcarrier based on the index information, the network device may determine the direction or angle of the terminal based on the first carrier frequency corresponding to the first subcarrier in various ways. For example, the network device may calculate the direction or angle of the terminal based on a ratio or difference between the center carrier frequency corresponding to the reference signal and the first carrier frequency.

In some embodiments, after determining the first subcarrier based on the index information, the network device may first determine whether it is necessary to re-determine the direction or angle of the terminal based on the first carrier frequency corresponding to the first subcarrier and the center carrier frequency corresponding to the reference signal. For example, if the difference between the center carrier frequency and the first carrier frequency reaches a preset frequency threshold, it is determined that the direction or angle of the terminal needs to be re-determined, and the direction or angle of the terminal is calculated based on the ratio of the center carrier frequency to the first carrier frequency.

In one implementation, the network device may calculate the direction or angle of the terminal by the following formula: ${θ}_{m} = arcsin \left(\frac{{f}_{c}}{{f}_{m}}sin\left(θ\right)\right)$

where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

In some embodiments, after receiving the first information from the terminal and determining the direction or angle of the terminal based on the index information indicated by the first information, the network device may adjust the direction or angle of the analog beamforming to the calculated direction or angle of the terminal and send beam adjustment result information or data to the terminal based on the adjusted direction or angle of the analog beamforming.

In some embodiments, after receiving the first information from the terminal and determining the direction or angle of the terminal based on the index information indicated by the first information, the network device may first determine whether it is necessary to adjust the direction or angle of the analog beamforming. For example, if the difference between the direction or angle of the terminal and the current direction or angle of the analog beamforming reaches a preset angle threshold, the network device adjusts the direction or angle of the analog beamforming to the calculated direction or angle of the terminal, and sends the beam adjustment result information or data to the terminal based on the adjusted direction or angle of the analog beamforming.

In some embodiments, the method for the network device to adjust the direction or angle of the analog beamforming may include: determining compensation precoding information; and adjusting the direction or angle of the analog beamforming to the direction or angle of the terminal by using the compensation precoding information, and eliminating an array gain loss caused by a beam squint.

In some embodiments, before receiving the reference signal from the network device, the terminal may also receive relevant configurations for the beam measurement from the network device, including at least one of: a configuration of the reference signal, a configuration of the beam measurement or a configuration of the index information.

In some embodiments, the configuration of the index information includes the SI configuration and/or the SGI configuration.

In some embodiments, the SI configuration includes at least one of: the resource unit set, in which the resource unit set is the subset of all resource units for the reference signal received by the terminal, or the corresponding relationship between the resource units and the index numbers.

In some embodiments, the SGI configuration includes at least one of: a resource unit group or a corresponding relationship between resource unit groups and index numbers.

The configuration of the reference signal may indicate the resource of the reference signal; the configuration of the beam measurement may be used to instruct the terminal to measure the receiving energy for the reference signal in each resource unit and a method for determining the resource unit with the maximum receiving energy; the configuration of the index information may include the SI configuration and/or the SGI configuration.

In some embodiments, the names of information and the like are not limited to the names described in embodiments. Terms such as "information", "message", "signal", "signaling", "report", "configuration", "indication", "instruction", "command", "channel", "parameter", "field", "field", "symbol", "symbol", "codebook", "codeword", "codepoint", "bit", "data", "program", "chip" may be replaced with each other.

In some embodiments, terms such as "time instant", "time point", "time", "time location" may be replaced with each other, and terms such as "time duration", "time period", "time window", "window", "time" may be replaced with each other.

In some embodiments, terms such as "component carrier (CC)", "cell", "frequency carrier", "carrier frequency" may be replaced with each other.

In some embodiments, terms such as "acquire", "obtain", "get", "receive", "transmit", "bidirectional transmission", "send and/or receive" may be replaced with each other, and these terms may be interpreted as having multiple meanings including receiving from another entity, obtaining from a protocol, obtaining from a higher layer, obtaining from a self-processing, implementing autonomously and the like.

In some embodiments, terms such as "send", "transmit", "report", "deliver", "transmit", "bidirectional transmission", "send and/or receive" may be replaced with each other.

Corresponding to the foregoing embodiments of the method for measuring a beam, the present disclosure further provides embodiments of the terminal and the network device.

Embodiments of the present disclosure further provide a network device, including: one or more processors; and a memory coupled to the one or more processors, in which the memory stores therein executable instructions that, when executed by the one or more processors, cause the network device to perform the method for measuring a beam described in the above embodiments.

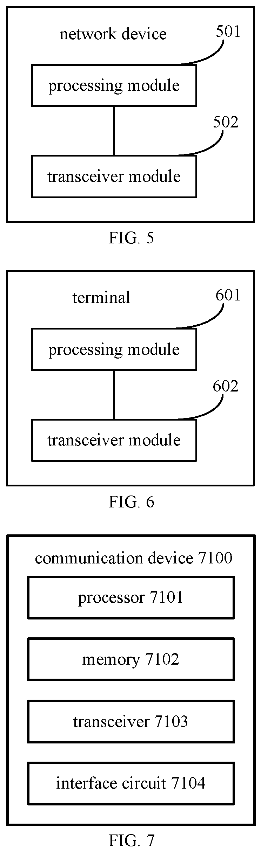

FIG. 5 is a schematic block diagram illustrating an apparatus structure of a network device in embodiments of the present disclosure. As shown in FIG. 5, the network device may be an apparatus for measuring a beam, in which the apparatus includes a processing module 501 and a transceiver module 502.

In some embodiments, the transceiver module 502 is configured to send a reference signal to a terminal, in which the reference signal is used for a beam measurement; and receive first information sent by the terminal, in which the first information indicates index information corresponding to a resource with a maximum receiving energy for the reference signal. The processing module 501 is configured to determine a direction or angle of the terminal based on the index information.

In some embodiments, the index information includes at least one of: an SI, in which the SI indicates a subcarrier corresponding to a resource unit with a maximum receiving energy among resource units for the reference signal received by the terminal; or an SGI, in which the SGI indicates a subcarrier group corresponding to a resource unit group with a maximum average receiving energy among resource unit groups for the reference signal received by the terminal.

In some embodiments, the SI indicates a subcarrier corresponding to a resource unit with a maximum receiving energy in a resource unit set, and the resource unit set is a subset of all resource units for the reference signal received by the terminal.

In some embodiments, the SGI indicates a subcarrier group corresponding to a resource unit group with a maximum average receiving energy among resource unit groups divided based on a resource unit set, in which the resource unit set is a subset of all resource units for the reference signal received by the terminal.

In some embodiments, the processing module 501 is configured to determine a first subcarrier based on the index information; and determine the direction or angle of the terminal based on a first carrier frequency corresponding to the first subcarrier.

In some embodiments, the processing module 501 is configured to determine a first subcarrier based on the index information; and determine the direction or angle of the terminal based on a first carrier frequency corresponding to the first subcarrier and a center carrier frequency corresponding to the reference signal.

In some embodiments, the processing module 501 is configured to determine the direction or angle of the terminal based on a ratio of the center carrier frequency to the first carrier frequency.

In some embodiments, the processing module 501 is configured to determine the direction or angle of the terminal by the following formula: ${θ}_{m} = arcsin \left(\frac{{f}_{c}}{{f}_{m}}sin\left(θ\right)\right)$
where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

In some embodiments, the processing module 501 is further configured to determine compensation precoding information; and adjust the direction or angle of the analog beamforming to the direction or angle of the terminal by using the compensation precoding information, and eliminate an array gain loss caused by a beam squint.

In some embodiments, the transceiver module 502 is further configured to send second information to the terminal, in which the second information is used to instruct the terminal to send the first information.

In some embodiments, the transceiver module 502 is further configured to send a configuration of the reference signal to the terminal.

In some embodiments, the transceiver module 502 is further configured to send a configuration of the beam measurement to the terminal.

In some embodiments, the transceiver module 502 is further configured to send a configuration of the index information to the terminal.

In some embodiments, the configuration of the index information includes an SI configuration and/or an SGI configuration.

In some embodiments, the SI configuration includes at least one of: a resource unit set, in which the resource unit set is a subset of all resource units for the reference signal received by the terminal; or a corresponding relationship between resource units and index numbers.

In some embodiments, the SGI configuration includes at least one of: a resource unit group; or a corresponding relationship between resource unit groups and index numbers.

It should be noted that the modules included in the network device are not limited to those described in the above embodiments, and may also include other modules, such as a storage module, a display module and the like.

Embodiments of the present disclosure further provide a terminal, including: one or more processors; and a memory coupled to the one or more processor, in which the memory stores therein executable instructions that, when executed by the one or more processors, cause the terminal to perform the method for measuring a beam described in the above embodiments.

FIG. 6 is a schematic block diagram illustrating an apparatus structure of a terminal in embodiments of the present disclosure. As shown in FIG. 6, the terminal may be an apparatus for measuring a beam, in which the apparatus includes a processing module 601 and a transceiver module 602.

In some embodiments, the transceiver module 602 is configured to receive a reference signal from a network device, in which the reference signal is used for the beam measurement; the processing module 601 is configured to determine a resource with a maximum receiving energy for the reference signal; and the transceiver module 602 is configured to send first information to the network device, in which the first information indicates index information corresponding to the resource with the maximum receiving energy for the reference signal.

In some embodiments, the index information includes at least one of: an SI, in which the SI indicates a subcarrier corresponding to a resource unit with a maximum receiving energy among resource units for the reference signal received by the terminal; or an SGI, in which the SGI indicates a subcarrier group corresponding to a resource unit group with a maximum average receiving energy among resource unit groups for the reference signal received by the terminal.

In some embodiments, the SI indicates a subcarrier corresponding to a resource unit with a maximum receiving energy in a resource unit set, in which the resource unit set is a subset of all resource units for the reference signal received by the terminal.

In some embodiments, the SGI indicates a subcarrier group corresponding to a resource unit group with a maximum average receiving energy among resource unit groups divided based on a resource unit set, in which the resource unit set is a subset of all resource units for the reference signal received by the terminal.

In some embodiments, the transceiver module 602 is further configured to receive second information from the network device, in which the second information is used to instruct the terminal to send the first information.

In some embodiments, the transceiver module 602 is further configured to receive a configuration of the reference signal from the network device.

In some embodiments, the transceiver module 602 is further configured to receive a configuration of the beam measurement from the network device.

In some embodiments, the transceiver module 602 is further configured to receive a configuration of the index information from the network device.

In some embodiments, the configuration of the index information includes an SI configuration and/or an SGI configuration.

In some embodiments, the SI configuration includes at least one of: a resource unit set, in which the resource unit set is a subset of all resource units for the reference signal received by the terminal; or a corresponding relationship between resource units and index numbers.

In some embodiments, the SGI configuration includes at least one of: a resource unit group; or a corresponding relationship between resource unit groups and index numbers.

It should be noted that the modules included in the terminal are not limited to those described in the above embodiments, and may also include other modules, such as a storage module, a display module and the like.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

Embodiments of the present disclosure further provide a communication device, including: one or more processors; and a memory coupled to the one or more processors, in which the memory stores therein executable instructions that, when executed by the one or more processors, cause the processor to invoke instructions to enable the communication device to perform the method for measuring a beam described in the above embodiments.

Embodiments of the present disclosure further provide a communication system, including: a terminal, in which the terminal is configured to implement the method for measuring a beam described in the above embodiments.; and a network device, in which the network device is configured to implement the method for measuring a beam described in the above embodiments.

Embodiments of the present disclosure further provide a storage medium, having stored therein instructions that, when executed on a communication device, cause the communication device to perform the method for measuring a beam described in the above embodiments.

Embodiments of the present disclosure further provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 7 is a block diagram illustrating a communication device 7100 in embodiments of the present disclosure. The communication device 7100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 7100 may be used to implement the method described in the above-mentioned method embodiment, for details, reference may be made to the description in the above-mentioned method embodiment.

As shown in FIG. 7, the communication device 7100 includes one or more processors 7101. The processor 7101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. One or more processors 7101 are configured to invoke instructions to cause the communication device 7100 to perform any of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. In a case where the communication device 7100 includes one or more transceivers 7103, communication steps such as sending and receiving in the above methods are performed by the transceiver 7103, and other steps are performed by the processor 7101.

In some embodiments, the transceiver may include a receiver and/or a transmitter, which may be separate or integrated. Optionally, terms such as transceiver, transceiver unit, transceiving machine, transceiver circuit and the like may be replaced with each other, terms such as transmitter, transmitting unit, transmitting machine, transmitting circuit and the like may be replaced with each other, and terms such as receiver, receiving unit, receiving machine, receiving circuit and the like may be replaced with each other.

Optionally, the communication device 7100 further includes one or more interface circuits 7104. The interface circuit 7104 is connected to the memory 7102. The interface circuit 7104 may be used to receive signals from the memory 7102 or other devices, and may be used to send signals to the memory 7102 or other devices. For example, the interface circuit 7104 may read an instruction stored in the memory 7102 and send the instruction to the processor 7101.

The communication device 7100 described in the above embodiments may be a network device or a terminal device, but the scope of the communication device 7100 described in the present disclosure is not limited thereto. The structure of the communication device 7100 may not be limited by FIG. 7. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

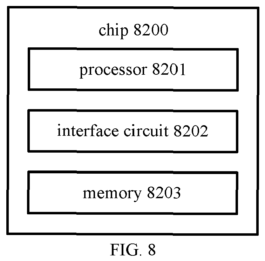

FIG. 8 is a block diagram illustrating a chip 8200 in embodiments of the present disclosure. In a case where the communication device 7100 may be a chip or a chip system, please refer to the block diagram of the chip 8200 shown in FIG. 8, but it is not limited to this.

The chip 8200 includes one or more processors 8201, in which the processors 8201 are configured to invoke instructions to cause the chip 8200 to perform any of the above methods.

In some embodiments, the chip 8200 further includes one or more interface circuits 8202. The chip 8200 is connected to the memory 8203. The interface circuit 8202 may further be configured to receive a signal from the memory 8203 or other devices, and the interface circuit 8202 may be configured to send a signal to the memory 8203 or other devices. For example, the interface circuit 8202 may read instructions stored in the memory 8203 and send the instructions to the processor 8201. Optionally, terms such as interface circuit, interface, transceiver pin, transceiver and the like may be replaced with each other.

In some embodiments, the chip 8200 further includes one or more memories 8203 for storing instructions. Optionally, all or part of the memories 8203 may be located outside the chip 8200.

The present disclosure further provides a storage medium on which instructions are stored, which, when executed on the communication device 7100, cause the communication device 7100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further provides a program product which, when executed by the communication device 7100, causes the communication device 7100 to perform any of the above methods. Optionally, the program product is a computer program product.

The present disclosure further provides a computer program that, when run on a computer, causes the computer to perform any of the above methods.

## Claims

1. A method for measuring a beam, performed by a network device, comprising:
sending a reference signal to a terminal, wherein the reference signal is used for a beam measurement;
receiving first information sent by the terminal, wherein the first information indicates index information corresponding to a resource with a maximum receiving energy for the reference signal; and
determining a direction or angle of the terminal based on the index information.

2. The method according to claim 1, wherein the index information comprises at least one of:
a subcarrier index (SI), wherein the SI indicates a subcarrier corresponding to a resource unit with a maximum receiving energy among resource units for the reference signal received by the terminal; or
a subcarrier group index (SGI), wherein the SGI indicates a subcarrier group corresponding to a resource unit group with a maximum average receiving energy among resource unit groups for the reference signal received by the terminal.

3. The method according to claim 2, wherein the SI indicates a subcarrier corresponding to a resource unit with a maximum receiving energy in a resource unit set, and the resource unit set is a subset of all resource units for the reference signal received by the terminal.

4. The method according to claim 2, wherein the SGI indicates a subcarrier group corresponding to a resource unit group with a maximum average receiving energy among resource unit groups divided based on a resource unit set, and the resource unit set is a subset of all resource units for the reference signal received by the terminal.

5. The method according to any one of claims 1 to 4, wherein determining the direction or angle of the terminal based on the index information comprises:
determining a first subcarrier based on the index information; and
determining the direction or angle of the terminal based on a first carrier frequency corresponding to the first subcarrier.

6. The method according to claim 5, wherein determining the direction or angle of the terminal based on the first carrier frequency corresponding to the first subcarrier comprises:
determining the direction or angle of the terminal based on the first carrier frequency corresponding to the first subcarrier and a center carrier frequency corresponding to the reference signal.

7. The method according to claim 6, wherein determining the direction or angle of the terminal based on the first carrier frequency corresponding to the first subcarrier and the center carrier frequency corresponding to the reference signal comprises:
determining the direction or angle of the terminal based on a ratio of the center carrier frequency to the first carrier frequency.

8. The method according to any one of claims 5 to 7, wherein determining the direction or angle of the terminal based on the first carrier frequency corresponding to the first subcarrier and the center carrier frequency corresponding to the reference signal comprises:
determining the direction or angle of the terminal by the following formula: ${θ}_{m} = arcsin \left(\frac{{f}_{c}}{{f}_{m}}sin\left(θ\right)\right)$
where *θ* represents a direction or angle of analog beamforming used when sending the reference signal to the terminal, *θₘ* represents the direction or angle of the terminal, *f_{c}*represents the center carrier frequency corresponding to the reference signal, *fₘ* represents a carrier frequency corresponding to m^{th} subcarrier, and the m^{th} subcarrier is the first subcarrier.

9. The method according to any one of claims 1 to 8, wherein after determining the direction or angle of the terminal based on the index information, the method further comprises:
determining compensation precoding information; and
adjusting the direction or angle of the analog beamforming to the direction or angle of the terminal by using the compensation precoding information, and eliminating an array gain loss caused by a beam squint.

10. The method according to any one of claims 1 to 9, wherein before sending the reference signal to the terminal, the method further comprises:
sending second information to the terminal, wherein the second information is used to instruct the terminal to send the first information.

11. The method according to any one of claims 1 to 10, further comprising:
sending a configuration of the reference signal to the terminal.

12. The method according to any one of claims 1 to 11, further comprising:
sending a configuration of the beam measurement to the terminal.

13. The method according to any one of claims 1 to 12, further comprising:
sending a configuration of the index information to the terminal.

14. The method according to claim 13, wherein the configuration of the index information comprises an SI configuration and/or an SGI configuration.

15. The method according to claim 14, wherein the SI configuration comprises at least one of:
a resource unit set, wherein the resource unit set is a subset of all resource units for the reference signal received by the terminal; or
a corresponding relationship between resource units and index numbers.

16. The method according to claim 14, wherein the SGI configuration comprises at least one of:
a resource unit group; or
a corresponding relationship between resource unit groups and index numbers.

17. A method for measuring a beam, performed by a terminal, comprising:
receiving a reference signal from a network device, wherein the reference signal is used for a beam measurement;
determining a resource with a maximum receiving energy for the reference signal; and
sending first information to the network device, wherein the first information indicates index information corresponding to the resource with the maximum receiving energy for the reference signal.

18. The method according to claim 17, wherein the index information comprises at least one of:
a subcarrier index (SI), wherein the SI indicates a subcarrier corresponding to a resource unit with a maximum receiving energy among resource units for the reference signal received by the terminal; or
a subcarrier group index (SGI), wherein the SGI indicates a subcarrier group corresponding to a resource unit group with a maximum average receiving energy among resource unit groups for the reference signal received by the terminal.

19. The method according to claim 18, wherein the SI indicates a subcarrier corresponding to a resource unit with a maximum receiving energy in a resource unit set, and the resource unit set is a subset of all resource units for the reference signal received by the terminal.

20. The method according to claim 18, wherein the SGI indicates a subcarrier group corresponding to a resource unit group with a maximum average receiving energy among resource unit groups divided based on a resource unit set, and the resource unit set is a subset of all resource units for the reference signal received by the terminal.

21. The method according to any one of claims 17 to 20, wherein before sending the reference signal to the terminal, the method further comprises:
receiving second information from the network device, wherein the second information is used to instruct the terminal to send the first information.

22. The method according to any one of claims 17 to 21, further comprising:
receiving a configuration of the reference signal from the network device.

23. The method according to any one of claims 17 to 22, further comprising:
receiving a configuration of the beam measurement from the network device.

24. The method according to any one of claims 17 to 23, further comprising:
receiving a configuration of the index information from the network device.

25. An apparatus for measuring a beam, comprising:
a transceiver module, configured to send a reference signal to a terminal, wherein the reference signal is used for a beam measurement; and receive first information sent by the terminal, wherein the first information indicates index information corresponding to a resource with a maximum receiving energy for the reference signal; and
a processing module, configured to determine a direction or angle of the terminal based on the index information.

26. An apparatus for measuring a beam, comprising:
a transceiver module, configured to receive a reference signal from a network device, wherein the reference signal is used for a beam measurement; and
a processing module, configured to determine a resource with a maximum receiving energy for the reference signal,
wherein the transceiver module is further configured to send first information to the network device, and the first information indicates index information corresponding to the resource with the maximum receiving energy for the reference signal.

27. A network device, comprising:
one or more processors; and
a memory coupled to the one or more processors, wherein the memory stores therein executable instructions that, when executed by the one or more processors, cause the network device to perform the method for measuring a beam according to any one of claims 1 to 16.

28. A terminal, comprising:
one or more processors; and
a memory coupled to the one or more processor, wherein the memory stores therein executable instructions that, when executed by the one or more processors, cause the terminal to perform the method for measuring a beam according to any one of claims 17 to 24.

29. A communication device, comprising:
one or more processors; and
a memory coupled to the one or more processors, wherein the memory stores therein executable instructions that, when executed by the one or more processors, cause the processor to invoke instructions to enable the communication device to perform the method for measuring a beam according to any one of claims 1 to 16, or the method for measuring a beam according to any one of claims 17 to 24.

30. A communication system, comprising:
a terminal, wherein the terminal is configured to implement the method for measuring a beam according to any one of claims 17 to 24; and
a network device, wherein the network device is configured to implement the method for measuring a beam according to any one of claims 1 to 16.

31. A storage medium, having stored therein instructions that, when executed on a communication device, cause the communication device to perform the method for measuring a beam according to any one of claims 1 to 16 or the method for measuring a beam according to any one of claims 17 to 24.
